(19) **Europäisches Patentamt**

**European Patent Office**

**Office européen des brevets**

(11) **EP 1 505 309 A2**

(12) **DEMANDE DE BREVET EUROPEEN**

(43) Date de publication:
**09.02.2005 Bulletin 2005/06**

(51) Int Cl.⁷: $F16D\ 48/06$

(21) Numéro de dépôt: **04300466.2**

(22) Date de dépôt: **23.07.2004**

(84) Etats contractants désignés:
**AT BE BG CH CY CZ DE DK EE ES FI FR GB GR HU IE IT LI LU MC NL PL PT RO SE SI SK TR**
Etats d'extension désignés:
**AL HR LT LV MK**

(30) Priorité: **08.08.2003 FR 0309775**

(71) Demandeur: **Renault s.a.s.**
**92100 Boulogne Billancourt (FR)**

(72) Inventeurs:
- **Guinois, Arnaud**
 **75013 Paris (FR)**
- **Valero, Thomas**
 **92120 Montrouge (FR)**

(54) **Procédé de contrôle d'un groupe motopropulseur équipé d'une transmission automatisée à embrayage**

(57) La présente invention concerne le contrôle du groupe motopropulseur GMP d'un véhicule équipé d'une transmission automatisée à embrayage TA_E. L'embrayage peut être du type sec ou humide. Elle s'applique principalement lors de la phase d'annulation du glissement qui précède le serrage final de l'embrayage,

Le procédé consiste à annuler le glissement de l'embrayage (2) lors de la phase d'accostage, lors d'un changement de rapport de transmission ou lors d'un décollage en égalisant les états dynamiques du moteur d'entraînement (1) et de l'embrayage (2).

**Fig. 1**

EP 1 505 309 A2

**Description**

La présente invention concerne le contrôle du groupe motopropulseur GMP d'un véhicule équipé d'une transmission automatisée à embrayage TA_E. L'embrayage peut être du type sec ou humide. Elle s'applique principalement lors de la phase d'annulation du glissement qui précède le serrage final de l'embrayage.

Ce type de transmission automatisée se distingue par un composant permettant de transmettre le couple moteur en le modulant de l'absence de couple transmis jusqu'à un couple normalement au moins égal au couple maximal du moteur d'entraînement, par exemple thermique : l'embrayage. Ce type de transmission exclue donc les convertisseurs de couple, qui sont capables d'amplifier le couple moteur lorsque la vitesse de la turbine du convertisseur est supérieure à un seuil de mode amplificateur.

Un embrayage est qualifié de sec lorsque la transmission du couple est réalisée via friction ou collage de deux pièces qui sont dans un carter sans huile et qui glissent l'une par rapport à l'autre ou se collent en absence d'huile ou autre fluide, Il peut y avoir un ou plusieurs embrayages secs. Par exemple, un véhicule en boîte de vitesse manuelle possède un embrayage sec dans la cloche de l'embrayage, entre le moteur et la Boîte de Vitesses BV.

Un embrayage est qualifié d'humide lorsque la friction des pièces est réalisée avec l'apport d'une lubrification quelconque pour laisser glisser les surfaces en phase d'ouverture et pour refroidir les surfaces.

Ainsi, cette invention pourra être utilisée, par exemple, dans les organes suivants : une Boîte de Vitesses Robotisé, un Embrayage Piloté, une transmission à deux embrayages en parallèle du genre « Twin Clutch », une transmission continûment variable CVT, une Boîte de vitesse Automatique BVA sans convertisseur, une Boîte de vitesses avec machine électrique intégrée, une boîte de vitesses à commande électrique du genre « Clutch by wire », ...

D'une manière générale, la présente invention s'applique au contrôle de tout organe devant moduler du couple afin de faire décoller un véhicule, sans que le conducteur intervienne (sauf cas de l'embrayage du type « clutch by wire », où la pédale d'embrayage est électrique). Ce couple pouvant venir d'un moteur essence, diesel, au gaz de pétrole liquéfié GPL, ou d'une machine électrique, ou d'une combinaison de ces types de moteur comme dans le cas d'un véhicule hybride.

En conclusion, cette fonction pourra être utilisée pour tous les types de véhicule utilisant une Transmission Automatisée à Embrayage TA_E.

Cette invention peut être appliquée dans le cas du décollage, mais aussi dans le cas d'un changement de rapport.

Cette invention peut être appliquée dans le cas où un calculateur contrôle le couple transmis par l'embrayage uniquement, ou dans le cas où un calculateur contrôle le couple transmis et le couple demandé au moteur, ou enfin dans le cas où un calculateur ne contrôle que le couple demandé au moteur thermique.

Dans les phases transitoires de couple dans un groupe moto propulseur exploitant une transmission automatisée à embrayage TA_E où un ré embrayage est nécessaire, la phase d'annulation du glissement entre les régimes primaire et moteur n'est pas toujours prise en compte dans les stratégies connues de l'état de la technique. Souvent, seule la phase de fermeture complète de l'embrayage une fois le glissement annulé est abordée. La phase d'annulation du glissement qui sera aussi appelée « Accostage » est le problème que se propose de traiter cette invention.

Dans le document DE-A-100.30.837 (col 4. lignes 49-51), on utilise la chute du couple transmis lors de l'accostage pour permettre au régime moteur de venir égaler de manière tangentielle le régime primaire. Mais ce document n'enseigne pas comment doivent être contrôlés le couple moteur et le couple primaire. De plus, comme l'accostage est réalisé par une chute de couple transmis, il n'est donc pas possible de suivre une consigne d'accélération souhaitée par le conducteur.

Dans le document FR-A-2.796.894 au nom du présent demandeur, on effectue une annulation du glissement en égalant la consigne de couple moteur et la consigne de couple transmis. Cette stratégie a un inconvénient certain qui est de provoquer l'annulation de la dérivée du régime moteur à l'accostage du régime primaire. Il en résulte que l'accélération du moteur est proche de zéro à l'accostage des régimes.

L'enseignement de l'état de la technique consiste donc en une stratégie proposant un accostage avec un régime moteur constant, alors que le régime primaire a tendance à augmenter ou diminuer lors d'un changement de rapport ou d'un décollage. L'annulation du glissement se fait donc entre deux organes n'ayant pas la même dynamique. On est donc contraint de faire tendre le régime primaire vers le régime moteur et finalement on ne conserve pas la dynamique souhaitée pour le véhicule.

C'est un objet de la présente invention de préserver la dynamique du véhicule et donc le confort des passagers en venant égaler les accélérations du moteur et de l'arbre primaire.

L'état de l'art en transmission automatisée à embrayage TA_E pour les décollages du véhicule, et en particulier en embrayage piloté et en BVR, était de ne contrôler que le couple transmis par l'embrayage via le calculateur de la transmission automatisée à embrayage TA_E.

L'invention se propose d'élargir l'usage au pilotage du couple moteur seul dans le cas du d'un embrayage de type « clutch by wire » et au pilotage simultané des couples transmis et moteur pour toutes les autres transmissions automatisées à embrayage TA_E, comme la Boîte de vitesses robotisée.

En effet la présente invention concerne un procédé de contrôle du groupe motopropulseur d'un véhicule équipé d'une transmission automatique à embrayage TA_E qui consiste à annuler le glissement de l'embrayage, lors de la phase d'accostage, lors d'un changement de rapport de transmission ou lors d'un décollage, en égalisant les états dynamiques du moteur d'entraînement et de l'embrayage.

D'autres caractéristiques et avantages de la présente invention seront mieux compris à l'aide de la description et des figures annexées parmi lesquelles :

- la figure 1 est un schéma bloc représentant les organes principaux du véhicule gérés dans le procédé de contrôle de l'invention ;
- la figure 2 est un schéma bloc d'un détail dans un mode de réalisation du véhicule de la figure 1 ;
- la figure 3 est un diagramme d'état dans lequel s'insère le procédé de l'invention ;
- les figures 4 à 6 représentent des graphes de divers paramètres d'asservissement et de pilotage lors de l'exécution du procédé de l'invention ; et
- la figure 7 est un schéma-bloc montrant l'opération d'un mode particulier de réalisation du procédé de l'invention sur un calculateur particulier.

Ainsi qu'il ressort de ce qui précède, l'état de l'art consiste à appliquer un contrôle de façon à suivre la relation $C_{mot} = C_{tr}$. En effet, l'application du principe fondamental de la dynamique au moteur alors que l'embrayage est glissant permet d'établir l'équation de couple :

$$J_{mot}\left(\frac{2\,pi}{60}\frac{dN_{mot}}{dt}\right) = C_{mot} \;-\; C_{tr}.$$

avec $C_{mot}$ : Couple moteur en *N.m*

$C_{tr}$ : Couple transmis par l'embrayage en *N.m*
$N_{mot}$ : Régime moteur en *tr.min⁻¹*
$J_{mot}$ : Inertie du moteur en *kg.m²*

Le procédé de l'invention part du constat que la phase d'accostage présentée dans l'état de la technique ne permet pas d'assurer le confort des passagers tout en respectant la volonté du conducteur en terme d'accélération ou de décélération. Le fait de ne pas respecter la dynamique souhaitée par le conducteur est d'ailleurs une source d'inconfort. Ce constat est particulièrement vrai lors des décollages du véhicule.

Afin qu'il n'y ait pas d'à-coups lors de l'accostage, le procédé de l'invention consiste à imposer que les deux organes tournant aient la même dynamique, de sorte que l'un des organes ne vienne pas freiner l'autre lorsque que l'on fermera l'embrayage. Il en résulte qu'on réaliser une annulation du glissement en respectant la relation : $\frac{dN_{mot}}{dt} = \frac{dN_{prim}}{dt}$, qui relie les dérivées temporelles des vitesses de rotation de l'arbre moteur (régime moteur) Nmot à la vitesse de rotation Nprim de l'arbre primaire ou de sortie de l'embrayage.

La modélisation du processus seul est déterminée à partir de l'application du Principe Fondamental de la Dynamique au véhicule, puis à l'arbre moteur. Il vient : $M_{veh}\cdot\gamma = \Sigma Forces$ soit :

$$M_{veh}\,R_{boite}\,R_{pont}\,R_{roue}\left(\frac{2\,pi}{60}\frac{dN_{prim}}{dt}\right) = \frac{C_{tr}}{R_{boite}R_{pont}R_{roue}} \;-\; \frac{C_{res}}{R_{roue}}$$

Lorsque l'embrayage est glissant, il vient :

$$J_{mot}\left(\frac{2\,pi}{60}\frac{dN_{mot}}{dt}\right) = C_{mot} \;-\; C_{tr}.$$

**3**

avec

$C_{mot}$ : Couple moteur en $N.m$

$C_{tr}$ : Couple transmis par l'embrayage en $N.m$

$N_{mot}$ : Régime moteur en $tr.min^{-1}$

$N_{prim}$ : Régime de l'arbre primaire en $tr.min^{-1}$

$J_{mot}$ : Inertie du moteur en $kg.m^2$

$M_{veh}$ : Masse du véhicule en $kg$

$\gamma$ : Accélération du véhicule en $m.s^{-2}$

$R_{boite}$ : Rapport de réduction correspondant à la vitesse engagée

$R_{pont}$ : Rapport de réduction du à la transmission

$R_{roue}$ : Rayon de la roue en $m$

$R_{total}$ : Produit de $R_{boite} \cdot R_{pont} \cdot R_{roue}$

$C_{res}$ : Couple résistant au niveau de la roue en $N.m$

Si on isole les dérivées des régimes moteur et primaire, on obtient:

$$\frac{dN_{prim}}{dt} = \frac{30\,C_{tr}}{pi\,M_{veh}R_{total}^2} - \frac{30\,C_{res}}{pi\,M_{veh}R_{total}R_{roue}}$$

$$\frac{dN_{mot}}{dt} = \frac{30\,C_{mot}}{pi\,J_{mot}} - \frac{30\,C_{tr}}{pi\,J_{mot}}$$

Donc l'égalisation des accélérations moteur et primaire donne :

$$\frac{30\,C_{tr}}{pi\,M_{veh}R_{total}^2} - \frac{30\,C_{res}}{pi\,M_{veh}R_{total}R_{roue}} = \frac{30\,C_{mot}}{pi\,J_{mot}} - \frac{30\,C_{tr}}{pi\,J_{mot}}$$

soit :

$$\frac{M_{veh}R_{total}^2 + J_{mot}}{M_{veh}R_{total}^2 J_{mot}}C_{tr} = \frac{C_{mot}}{J_{mot}} + \frac{C_{res}}{M_{veh}R_{total}R_{roue}}$$

D'où, la relation suivante permettant un accostage sans à-coups :

$$C_{tr} = \frac{M_{veh}R_{total}^2}{M_{veh}R_{total}^2 + J_{mot}}C_{mot} + \frac{R_{total}J_{mot}}{R_{roue}\left(M_{veh}R_{total}^2 + J_{mot}\right)}C_{res}$$

qui peut se transcrire sous la forme : $C_{tr} = a \times C_{mot} + b \times C_{res}$ ,

dans laquelle a et b sont des constantes.

Sachant que le rapport entre la pondération associée au couple moteur et celle associée au couple résistant est égal à $\frac{M_{veh}R_{total}R_{roue}}{J_{mot}} \gg 1$, il est souvent possible de négliger l'influence du couple résistant. On établit alors dans un mode de réalisation une stratégie de commande qui permet de venir annuler le glissement en respectant la relation suivante :

$$C_{tr} = \frac{M_{veh}R_{total}^2}{M_{veh}R_{total}^2 + J_{mot}}C_{mot}$$

tant que le couple résistant reste faible. Dans une telle stratégie, il est alors possible de construire un estimateur du couple résistant sur la base de la différence mesurée : $C_{tr,mes}$ - $C_{mot,mes}$ = $\Delta C$.

Dans un mode de réalisation, on exploite l'intégration de l'équation fondamentale mise en oeuvre dans le procédé de l'invention : $N_{mot}$ = $N_{prim}$ + $N_{mot,pred}$, expression dans laquelle $N_{mot,pred}$ est une constante d'intégration qui est déterminée sur la base de la mesure du degré d'enfoncement de la pédale d'accélérateur.

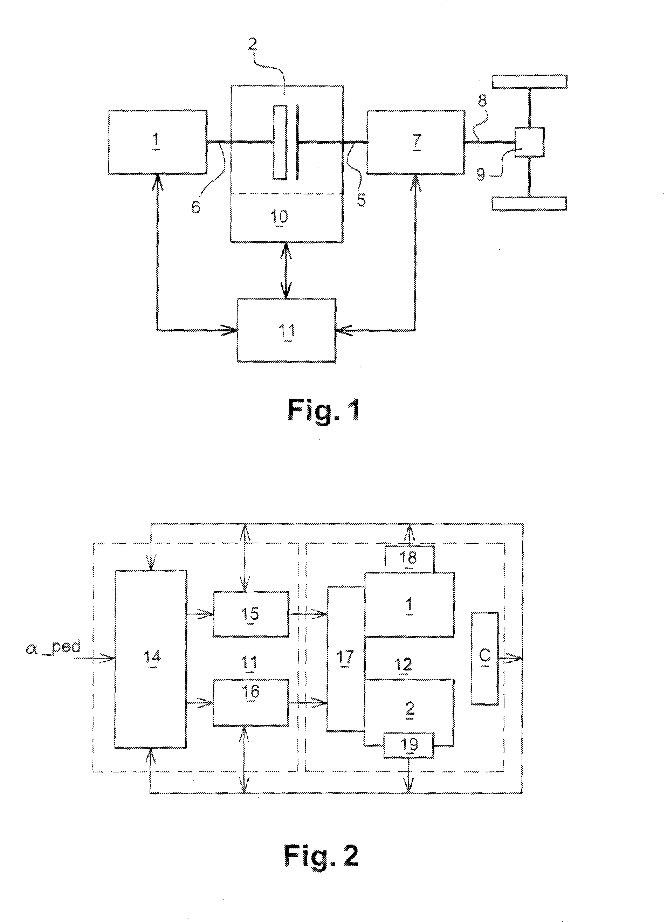

La figure 1 représente une chaîne cinématique permettant une mise en oeuvre de l'invention. Le moteur 1 comporte un arbre de sortie 6 qui est connecté mécaniquement à l'arbre d'entrée d'un embrayage 2 dont l'arbre de sortie de 5 est connecté à l'entrée de la transmission 7. Un arbre de sortie 8 de la transmission 7 est connectée par l'intermédiaire d'un différentiel 9 aux roues d'entraînement du véhicule. Des actionneurs non représentés permettent de déterminer le point de fonctionnement du moteur sous la commande d'un calculateur 11 dont un autre canal est connecté à une interface de commande d'un actionneur 10 de façon à contrôler l'ouverture, le glissement et le contact de l'embrayage 2. Des capteurs sont disposés sur la transmission de façon à déterminer les différents paramètres de fonctionnement du véhicule comme la vitesse de régime primaire sur l'arbre 5.

La figure 2 représente un schéma de dispositif faisant apparaître les actionneurs ainsi que les capteurs. Cette invention est implémentée dans le calculateur et constitue une partie de la stratégie composant la loi de gestion du décollage ou du passage de vitesse. Ce mode de réalisation de l'invention se place dans le cadre d'une commande multivariable. Un exemple de réalisation d'une telle commande multivariable est notamment décrit dans la demande de brevet français FR-A-2.796.894 déposée au nom du même demandeur. Il y est fait expressément référence et une telle commande ne sera pas plus décrite. L'asservissement du moteur est exécuté par un bloc 15, et le pilotage de l'embrayage est exécuté par un bloc 16. Ces deux contrôles sont effectués sur la base de la loi de gestion du décollage ou du passage de vitesse, exécutée par un bloc 14. L'asservissement du moteur 15 reçoit du bloc 14 de gestion du décollage, une consigne de couple moteur et le pilotage de l'embrayage 16 reçoit une consigne de couple transmis du bloc 14 de gestion de décollage. Ces deux consignes sont calculées, lors de l'accostage des régimes, selon le procédé de cette invention.

L'asservissement du moteur 1 exécuté par le bloc 15, produit une commande d'activation de la couche des actionneurs 17 de façon à déterminer le point de fonctionnement du moteur 1, c'est-à-dire, l'établissement du régime moteur et du couple moteur.

Le pilotage de l'embrayage 2 est exécuté par le bloc 16 et produit une commande d'activation de la couche des actionneurs 17 de façon à déterminer un régime d'accostage du plateau et de la garniture de l'embrayage 2.

Des capteurs 18 produisent des mesures ou des estimations permettant de caractériser à chaque instant les paramètres de fonctionnement du moteur 1 : régime moteur instantané N_mot_mes et le cas échéant, couple moteur instantané C_mot_mes. Ces divers paramètres sont transmis notamment au bloc de gestion de décollage 14 ainsi qu'au bloc de contrôle de l'asservissement 15.

Des capteurs 19 produisent des mesures ou des estimations permettant de caractériser à chaque instant les paramètres de fonctionnement embrayage 2 : Régine primaire N_prim_mes. Ces divers paramètres sont transmis notamment au bloc de gestion de décollage 14 ainsi qu'au bloc de contrôle de l'asservissement 16.

Des capteurs C produisent des mesures ou des estimations permettant de caractériser à chaque instant ou lors d'initialisation du procédé de l'invention des paramètres de fonctionnement du véhicule : rayon des roues d'entraînement du véhicule, masse du véhicule, vitesse de déplacement du véhicule, rapport total de transmission. Ces divers paramètres sont transmis aux trois blocs 14 de gestion de l'accostage, 15 de contrôle de l'asservissement du moteur et 16 du pilotage de l'embrayage.

Le bloc 14 de gestion de l'accostage reçoit aussi en entrée la valeur instantanée du degré d'enfoncement de la pédale d'accélération, $\alpha$_ped, de façon notamment à déterminer un point de consigne de fonctionnement du moteur, incluant notamment le régime moteur et le couple transmis.

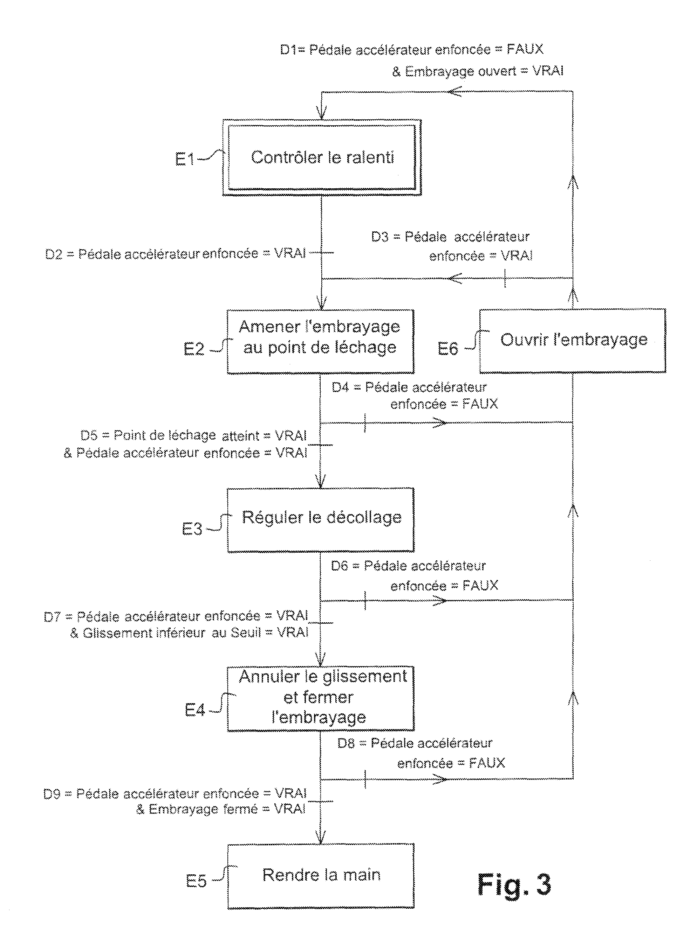

La figure 3 est un organigramme décrivant les différentes étapes de commande dans le cas d'un décollage. Le procédé de l'invention concerne le début de l'étape E4 : "Annuler le glissement et fermer l'embrayage", c'est à dire l'annulation du glissement, ou encore régime d'accostage.

Chacun des traits perpendiculaires aux flèche indiquant le trajet du contrôle indique l'état logique du test référencé permettant de passer à l'étape suivante et les différents tests permettent de tester l'état de renforcement de la pédale d'accélérateur, l'état d'ouverture de l'embrayage, la détection du point de léchage, la détection de l'état de glissement sur le plateau et la butée d'embrayage. Les neufs tests successifs sont indiqués par les références d1 à d9.

L'ordinogramme de la figure 3 comporte six étapes qui sont successivement l'étape E1 qui permet de contrôler le ralenti du moteur d'entraînement, puis l'étape E2 qui permet d'amener l'embrayage au point de léchage grâce à un déplacement linéaire de la butée de d'embrayage commandé à l'aide d'un actionneur linéaire piloté en position et en vitesse. Puis, on exécute lors de l'état E3 la régulation du décollage puis l'étape E4, directement concernée par l'invention d'annulation du glissement (accostage) et de fermeture finale de l'embrayage 2. Si le test d8 n'est pas vrai est ici le test d9 est faux, on retourne à une étape E6 d'ouverture de l'embrayage 2.

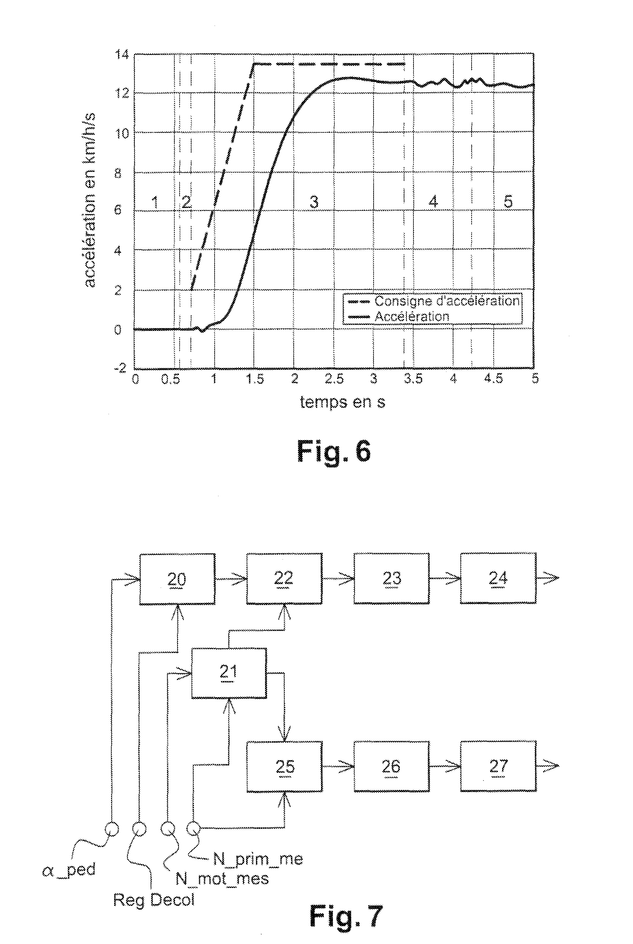

À la figure 7, on a représenté un mode particulier de réalisation du procédé de l'invention quand il est exécuté sur un calculateur de bord particulier. Par la connexion au bus interne de signaux du véhicule comme un bus CA, les paramètres nécessaires au fonctionnement de consigne de l'invention sont transmises et notamment successivement les valeurs de $\alpha$\_ped du degré d'enfoncement de pédale d'accélérateur, Reg\_Decol qui indique la fin du de la régulation de décollage de l'étape de décollage 5 (figure 3), et les valeurs de mesure instantanée du régime moteur N\_mot\_mes et du régime primaire à la sortie d'embrayage N\_prim\_mes.

Un premier bloc d'un traitement 20 reçoit sur une première entrée le degré enfoncement de la pédale d'accélérateur et sur une seconde entrée l'indicateur de fin d'état de régulation du décollage. Le bloc 20 de traitement produit à sa sortie une valeur indicatrice d'un régime moteur qui, dans un mode particulier de réalisation, est calculé à partir de la position de la pédale, de sa variation temporelle ou à partir de la valeur mesurée du régime moteur. La valeur mesurée du régime moteur N\_mot\_mes est transmise à une première entrée d'un bloc de traitement 21 dont une seconde entrée reçoit la valeur mesurée du régime primaire N\_prim\_mes qui est aussi transmise à une première entrée d'un additionneur 25 ainsi qu'il sera décrit plus loin. Le bloc de traitement 21 applique la stratégie enregistrée dans le calculateur mettant en oeuvre le procédé de l'invention et permet d'améliorer le confort des personnes transportées dans le véhicule lors de l'accostage. La stratégie permet d'équilibrer les dynamiques ou les états dynamiques de l'embrayage et du moteur en appliquant par exemple ainsi qu'il était décrit plus haut l'égalité des variations temporelles à du régime moteur et du régime primaire. Le bloc de traitement 21 produit sur une première sortie un incrément de commande de régime moteur qui est transmis à une seconde entrée de l'additionneur 22. Le nouveau signal indicatif de la consigne de régime moteur est transmis à une entrée d'un bloc de traitement 23 qui réalise l'asservissement du moteur et d'une borne de sortie qui transmet un signal de commande d'asservissement à l'entrée d'activation d'un actionneur 24. L'actionneur 24 applique une action mécanique sur les organes convenable du moteur comme le papillon d'admission.

Le bloc de traitement 21 produit sur une seconde sortie un incrément de commande de régime primaire qui est transmis à une seconde entrée de l'additionneur 25. Le nouveau signal indicatif de la consigne de la position de la butée d'embrayage est transmise à une entrée d'un bloc d'un traitement 26 qui réalise le pilotage de l'embrayage est une borne de sortie qui transmet un signal de pilotage à une borne d'entrée d'activation d'un actionneur 27. L'actionneur 27 applique une action mécanique sur la butée de l'embrayage de façon à réguler le couple transmis.

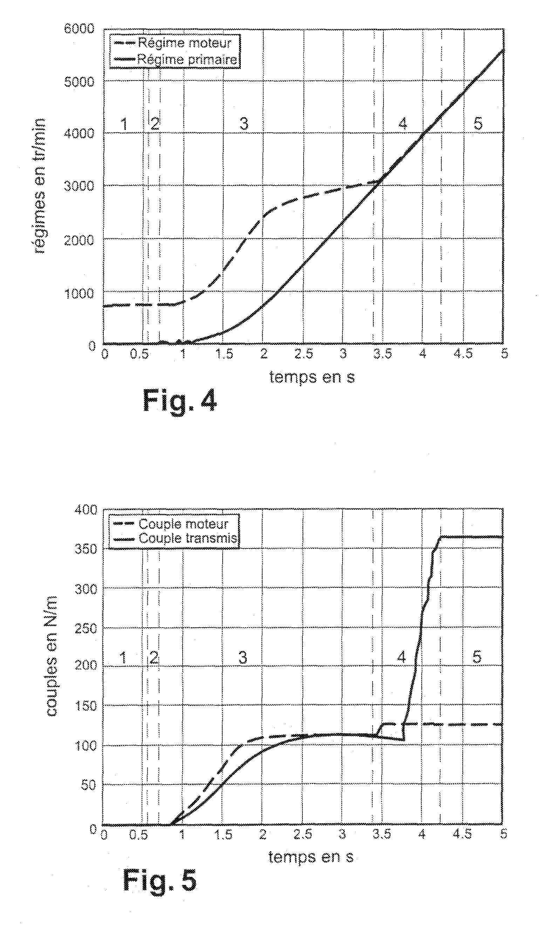

Les figures 4, 5 et 6 correspondent à un décollage. Les numéros indiqués correspondent aux six phases de l'organigramme de la figure 3.

La figure 4 présente l'évolution temporelle des régimes moteur Nmot\_mes et primaire Nprim\_mes lors d'un décollage. La figure 5 présente l'évolution temporelle des couples moteur Cmot\_mes et transmis Ctrans\_mes lors d'un décollage. La figure 6 présente l'évolution temporelle de l'accélération du véhicule lors d'un décollage.

Les résultats obtenus en terme de régimes sont un accostage tangentiel (figure 4). Dans le cas de décollage présenté, le couple moteur est augmenté alors que le couple transmis est conservé constant (figure 5) afin d'assurer l'accélération du véhicule (figure 6).

**Revendications**

1.    Procédé de contrôle du groupe motopropulseur d'un véhicule équipé d'une transmission automatique à embrayage TA\_E, **caractérisé en ce qu'**il consiste à annuler le glissement de l'embrayage lors de la phase d'accostage lors d'un changement de rapport de transmission ou lors d'un décollage, en égalisant les états dynamiques du moteur d'entraînement et de l'embrayage.

2.    Procédé selon la revendication 1, **caractérisé en ce qu'**il consiste à produire un ordre de commande du point de fonctionnement (Nmot, Cmot) du moteur du groupe motopropulseur et/ou un ordre de commande de la course d'embrayage en respectant une condition d'égalité de la variation instantanée des régimes moteur (1) et de l'arbre primaire de l'embrayage (2).

3.    Procédé selon la revendication 2, **caractérisé en ce que** la condition d'égalité est testée en déterminant une commande du groupe motopropulseur tel que le couple transmis (Ctr) est déterminé sur la base d'une combinaison linéaire du Couple moteur (Cmot) et du couple résistant (Cres) selon une relation de la forme Ctr = a x Cmot + b x Cres.

4.    Procédé selon la revendication 3, **caractérisé en ce que** le coefficient a de proportionnalité sur le couple moteur dépend de paramètres prédéterminés et/ou estimés lors du roulage dont la masse du véhicule (Mveh), le rapport de transmission (Rtot) et le moment d'inertie du moteur (Jmot), notamment selon une relation définie par :

$$a = \frac{M_{veh}R_{total}^2}{M_{veh}{}^*R_{total}^2 + J_{mot}}$$

**5.** Procédé selon la revendication 3, **caractérisé en ce que** le coefficient b de proportionnalité sur le couple résistant dépend de paramètres prédéterminés et/ou estimés lors du roulage dont la masse du véhicule (Mveh), le rapport de transmission (Rtot), le rayon des roues d'entraînement du véhicule (Rroue) et le moment d'inertie du moteur (Jmot), notamment selon une relation définie par :

$$b = \frac{J_{mot}R_{total}}{R_{roue}(M_{veh}{}^*R_{total}^2 + J_{mot})} .$$

**6.** Procédé selon la revendication 5, **caractérisé en ce qu'**il comporte une étape pour tester si le terme b x Cres est négligeable relativement au terme a x Cmot, ou une étape équivalente pour déduire une estimation du couple résistant quand on détecte une différence significative entre le couple transmis (Ctr) et la proportion de couple moteur qui pourrait lui être égal (a x Cmot).

**7.** Procédé selon l'une quelconque des revendications précédentes, **caractérisé en ce qu'**il comporte une étape de mesure du degré d'enfoncement de la pédale d'accélérateur et le cas échéant de sa dérivée temporelle pour en déduire une valeur initiale de régime moteur et le cas échéant de variation de la commande du groupe motopropulseur dans la phase d'accostage.

**8.** Procédé selon l'une des revendications précédentes, **caractérisé en ce qu'**il comporte une étape de détermination d'une consigne de couple transmis en fonction d'une mesure de la position de la pédale d'embrayage.

**9.** Procédé selon l'une des revendications précédentes, **caractérisé en ce qu'**il comporte de plus lors de la phase d'accostage, une étape de contrôle du couple transmis et/ou une étape de contrôle du couple moteur.

**10.** Procédé selon l'une des revendications précédentes **caractérisé en ce que** le contrôle est exécuté sur la base d'une régulation linéaire multivariable.

**Fig. 1**

**Fig. 2**

D1= Pédale accélérateur enfoncée = FAUX
& Embrayage ouvert = VRAI

E1 — Contrôler le ralenti

D2 = Pédale accélérateur enfoncée = VRAI

D3 = Pédale accélérateur
enfoncée = VRAI

E2 — Amener l'embrayage
au point de léchage

E6 — Ouvrir l'embrayage

D4 = Pédale accélérateur
enfoncée = FAUX

D5 = Point de léchage atteint = VRAI
& Pédale accélérateur enfoncée = VRAI

E3 — Réguler le décollage

D6 = Pédale accélérateur
enfoncée = FAUX

D7 = Pédale accélérateur enfoncée = VRAI
& Glissement inférieur au Seuil = VRAI

E4 — Annuler le glissement
et fermer
l'embrayage

D8 = Pédale accélérateur
enfoncée = FAUX

D9 = Pédale accélérateur enfoncée = VRAI
& Embrayage fermé = VRAI

E5 — Rendre la main

**Fig. 3**

9

Fig. 4

Fig. 5

**Fig. 6**

**Fig. 7**